# EUROPÄISCHE PATENTSCHRIFT

(11) **EP 2 195 870 B1**
(45) Veröffentlichungstag und Bekanntmachung des Hinweises auf die Patenterteilung: **01.06.2016**
(21) Anmeldenummer: 08804678.4
(22) Anmeldetag: 24.09.2008
(51) Int. Cl.: H01M 8/04, H01M 8/06, B64D 11/02, B64D 41/00

(54) **LUFTFAHRZEUG MIT BRENNSTOFFZELLENSYSTEM MIT SAUGBETRIEB**
AIRCRAFT WITH FUEL CELL SYSTEM WITH SUCTION OPERATION
AÉRONEF AVEC SYSTÈME DE PILE À COMBUSTIBLE AVEC FONCTION D'ASPIRATION

(30) Priorität: 27.09.2007 DE 102007046381; 27.09.2007 US 995553 P
(43) Veröffentlichungstag der Anmeldung: 16.06.2010
(73) Patentinhaber: Airbus Operations GmbH, 21129 Hamburg (DE)
(72) Erfinder: FRAHM, Lars, 20357 Hamburg (DE); RIEGER, Ulrich, 22607 Hamburg (DE); HOFFJANN, Claus, 21147 Hamburg (DE); SCHULDZIG, Hansgeorg, 21635 Jork (DE)
(74) Vertreter: Kopf Westenberger Wachenhausen Patentanwälte PartG mbB
(86) Internationale Anmeldenummer: PCT/EP2008/062773
(87) Internationale Veröffentlichungsnummer: WO 2009/043775

(56) Entgegenhaltungen:
- DE-A1-102005 051 583
- US-A- 4 865 631
- US-A- 4 955 091
- US-A1- 2001 021 468
- US-A1- 2002 006 537
- US-A1- 2003 003 333
- US-A1- 2004 062 960

## Beschreibung

### Gebiet der Erfindung

Die Erfindung betrifft die Versorgung in Luftfahrzeugen. Insbesondere betrifft die Erfindung ein Flugzeug mit einem Brennstoffzellensystem.

### Technischer Hintergrund

Bekannte Brennstoffzellensysteme für den Betrieb in einer für den Menschen atembaren Atmosphäre werden in der Regel mit Luft, Sauerstoff und Wasserstoff versorgt. Um den für eine vollständige Umsetzung des Wasserstoffs nötigen Luftumsatz und damit die nötige Sauerstoffmenge bereitzustellen, werden luftseitig Lüfter oder Kompressoren eingesetzt. Diese Systeme arbeiten in der Regel mit Luftüberschuss.

Die Kompressoren benötigen zum Betrieb Energie, z. B. elektrische Energie, sind Geräusch emittierend und erhöhen das Gesamtgewicht des Systems.
Zusätzlich enthalten Kompressoren bewegliche Bauteile, die einem Verschleiß unterliegen. Dies kann die Gesamtzuverlässigkeit eines solchen Systems reduzieren.

Für die Entsorgung von Abwässern aus dem Passagierbereich werden in heutigen Verkehrsflugzeugen sog. Vakuum-Abwassersysteme eingesetzt. Diese Systeme transportieren Fäkalien mittels des Transportmediums Luft, welche in Reiseflughöhe durch die Druckdifferenz zwischen der Flugzeugumgebung und dem Kabinendruck aus der Bordtoilette in den Abwassertank strömt. Hierbei ist der Abwassertank direkt mit der Außenluft verbunden.

In geringerer Flughöhe oder am Boden wird die zum Fäkalientransport benötigte Druckdifferenz über einen Vakuum-Generator erzeugt. Hierbei sind die verwendeten Abwassertanks im Regelfall als Drucktanks ausgeführt, die für den Betrieb bei maximal möglicher Druckdifferenz ausgelegt sind.

Die DE 10 2005 051 583 A1 betrifft ein Brennstoffzellensystem für die Versorgung von Luftfahrzeugen. Die Brennstoffzelle weist einen ersten Eingangsanschluss, einen ersten Ausgangsanschluss, eine Kathodenseite und eine Anodenseite auf, wobei der erste Eingangsanschluss als Eingangsanschluss der Kathodenseite ausgebildet ist und wobei der erste Ausgangsanschluss als Ausgangsanschluss der Kathodenseite ausgebildet ist.

Die US 2001/0021468 A1 beschreibt ein Brennstoffzellensystem, welches eine Befeuchtungseinheit aufweist, so dass die Brennstoffzelle auch im Falle, dass die Feuchtigkeit beim Aufstarten unzureichend ist, ausreichend befeuchtet werden kann.

Die US 4,865,631 und die US 4,955,091 betreffen jeweils ein Vakuum Toilettensystem mit einem Abwasser Separator und einem Lagertank.

### Darstellung der Erfindung

Es ist eine Aufgabe der vorliegenden Erfindung, ein verbessertes Brennstoffzellensystem für ein Luftfahrzeug anzugeben.

Diese Aufgabe wird durch den Gegenstand des unabhängigen Anspruchs gelöst.

Die Erfindung betrifft ein Flugzeug mit einem Brennstoffzellensystem, das Brennstoffzellensystem aufweisend:
ein Versorgungsmodul mit einer Brennstoffzelleneinheit;
ein Saugmodul zum Saugen von Sauerstoff durch die Brennstoffzelleneinheit;
eine Energiemanagementeinheit zur Steuerung einer Saugleistung des Saugmoduls, so dass die Saugleistung unabhängig von einer Flughöhe des Luftfahrzeugs einstellbar ist;
einen Abwasser Separator;
ein Lagermodul zum Sammeln des Abwassers aus dem Abwasser Separator, das Lagermodul aufweisend eine Heiz-Kühlkombination mit einem Außenluftkühler und einem Einfrierschutzlagertank;
einen Kühlkreis mit einer Kühlwasserpumpe;
einen Kondensator zum Auskondensieren von Wasser aus Brennstoffzellenabgasen und zum Zuführen der beim Auskondensieren abfallenden Abwärme an den Kühlkreis;
wobei die Brennstoffzelleneinheit an die Kühlwasserpumpe angeschlossen ist und über den die Kühlwasserpumpe enthaltenden Kühlkreis mit dem Kondensator verbunden ist; und
wobei der Außenluftkühler über eine Leitung zwischen dem Einfrierschutzlagertank und der Kühlwasserpumpe angeschlossen ist;
wobei das Saugmodul zum Saugen von Sauerstoff durch die Brennstoffzelleneinheit den Abwasser Separator aufweist, der als Drucktank ausgeführt ist und zur Erzeugung des erforderlichen Unterdruckes an die Luftfahrzeugumgebung angeschlossen ist, und der weiterhin zum Aufnehmen von Abwasser aus einer Bordtoilette oder einem Waschbecken ausgeführt ist.

Gemäß der vorliegenden Erfindung ist ein Brennstoffzellensystem für ein Luftfahrzeug angegeben, welches ein Versorgungsmodul mit einer Brennstoffzelleneinheit und ein Saugmodul zum Saugen von Sauerstoff oder einem sauerstoffhaltigen Gasgemisch (wie z.B. Luft) durch die Brennstoffzelleneinheit aufweist.

Auf diese Weise können die Brennstoffzelleneinheit, welche beispielsweise als Brennstoffzellenstapel ausgeführt ist, und ein in dem Flugzeug verwendetes Vakuumsystem (Saugmodul) miteinander kombiniert werden, um das Brennstoffzellensystem bereitzustellen. Somit kann die Funktion eines Kompressors durch das Saugmodul (beispielsweise als Vakuum-Generator oder in Form eines Außenluftanschlusses) ersetzt werden. Auf diese Weise kann der zur Reaktion mit Wasserstoff in der Brennstoffzelle in Einheit erforderliche Sauerstoff aus dem mit Druck beaufschlagten Kabinenbereich durch die Brennstoffzelleneinheit hindurch gezogen werden.

Somit kann ein zusätzlicher Kompressor für das Brennstoffzellensystem vollständig entfallen. Dies resultiert in einer Gewichtseinsparung, der Vermeidung zusätzlicher Verschleißteile und der Erhöhung der Gesamtzuverlässigkeit des Systems.

Gemäß der Erfindung ist eine Energiemanagementeinheit zur Steuerung einer Saugleistung des Saugmoduls vorgesehen, so dass die Saugleistung unabhängig von einer Flughöhe des Luftfahrzeugs einstellbar ist, wobei das Saugmodul zum Saugen von Sauerstoff durch die Brennstoffzelleneinheit einen Abwasser-Separator aufweist, der als Drucktank ausgeführt ist und zur Erzeugung des erforderlichen Unterdruckes an die Luftfahrzeugumgebung angeschlossen ist, und der weiterhin zum Aufnehmen von Abwasser aus einer Bordtoilette oder einem Waschbecken ausgeführt ist.

Gemäß einem weiteren Ausführungsbeispiel der vorliegenden Erfindung ist das Versorgungsmodul zum Erzeugen von Frischwasser und elektrischer Energie ausgeführt. Es können also voluminöse Frischwasserspeichertanks, die vor dem Start ausgetauscht oder aufgefüllt werden müssen, entfallen, weil das benötigte Frischwasser an Bord während des Fluges erzeugt werden kann.

Da das Versorgungsmodul über die Brennstoffzelleneinheit elektrische Energie erzeugt, können auch zusätzliche Stromerzeuger eingespart werden.

Gemäß einem weiteren Ausführungsbeispiel der vorliegenden Erfindung weist das Versorgungsmodul einen Feuchte-Wärmetauscher zur Vorbefeuchtung des durch die Brennstoffzelleneinheit gesaugten Sauerstoffs auf.

Der Feuchte-Wärmetauscher kann dabei sowohl als externes Bauteil als auch als eine in die Brennstoffzelleneinheit bzw. dem Brennstoffzellenstapel integrierte Vorrichtung ausgeführt sein.

Gemäß der vorliegenden Erfindung weist das Saugmodul einen Abwasser Separator zum Aufnehmen von Abwasser aus einer Bordtoilette oder einem Waschbecken auf, wobei der Abwasser Separator als Drucktank ausgeführt ist.

Beispielsweise ist der Abwasser Separator über ein entsprechendes Ventil an die Flugzeugumgebung angeschlossen, so dass er in Reiseflughöhe den notwendigen Unterdruck bereitstellen kann, um das Durchsaugen von Luft bzw. Sauerstoff durch die Brennstoffzelleneinheit zu ermöglichen. In diesem Fall ist kein Generator bzw. ist keine Pumpe zum Erzeugen des Saugeffektes nötig.

Sollte der Außendruck zu hoch sein, kann ein zusätzlicher Generator bzw. eine zusätzliche Pumpe vorgesehen sein, um die Saugwirkung zu erreichen.

Gemäß einem weiteren Ausführungsbeispiel der vorliegenden Erfindung ist der Abwasser Separator in Form eines Zyklon-Abscheiders ausgeführt. Dadurch wird eine Trennung von flüssigen und festen Bestandteilen von dem Luftstrom erreicht.

Das Abwasser tritt z.B. tangential in den Abwasser Separator, also den ZyklonAbscheider, ein. Allerdings kann der Abwasser Separator auch in jeder anderen Bauart vorliegen, der diese Trennung ermöglicht. So kann der Abwasser Separator wie ein konventioneller Flugzeugabwassertank gestaltet sein. Allerdings muss er aufgrund der Trennung der Funktion Transport und Sammlung des Abwassers lediglich ein Volumen von wenigen Spülvorgängen (der Bordtoilette) aufweisen, was eine erhebliche Gewichtseinsparung bedeutet.

Gemäß der vorliegenden Erfindung weist das Brennstoffzellensystem ein Lagermodul zum Sammeln des Abwassers aus dem Abwasser Separator auf. Der Abwasser Separator wird somit nur als Zwischenspeicher verwendet.

Das Lagermodul weist gemäß einem weiteren Ausführungsbeispiel der vorliegenden Erfindung einen Abwasser-Lagertank auf, der stets einem Kabinendruck ausgesetzt ist.

Somit kann der (große) Abwasser-Lagertank auch aus Materialien gefertigt sein, welche hohen Unterdrücken nicht standhalten. Dies kann zu einer Gewichts- und Kosteneinsparung führen.

Gemäß einem weiteren Ausführungsbeispiel der vorliegenden Erfindung bilden das Saugmodul und das Lagermodul einen Teil eines Vakuumsystems für eine Bordtoilette aus.

Auf diese Weise wird eine Kombination aus Abwasser Entsorgungssystem und Brennstoffzellensystem in Luftfahrzeugen bereitgestellt, wobei das Abwasserentsorgungssystem zum Saugen von Luft oder anderen Gasen durch die Brennstoffzelleneinheit dient.

Gemäß einem weiteren Ausführungsbeispiel der vorliegenden Erfindung weist das Brennstoffzellensystem weiterhin ein Frischwassermodul zum Speichern des von dem Versorgungsmodul erzeugten Frischwassers auf.

Beispielsweise besteht das Frischwassermodul u. a. aus einem Kaltwasserkreis und einem Warmwasserkreis mit einem Wärmetauscher. Gemäß einem Ausführungsbeispiel der vorliegenden Erfindung ist der Warmwasserkreis über den Wärmetauscher mit einer bei einer Kondensation in einem Kondensator im Versorgungsmodul oder beim Betrieb eines elektrischen Verbrauchers abfallenden Abwärme beheizbar. Der Kaltwasserkreis und der Warmwasserkreis sind jeweils zur Frischwasserversorgung der Passagiere oder von Verbrauchern im Luftfahrzeug ausgeführt.

Gemäß einem weiteren Ausführungsbeispiel der vorliegenden Erfindung ist der Kaltwasserkreis mit einem Regelventil zur Speisung des Warmwasserkreises ausgeführt. Auf diese Weise kann die im Warmwasserkreis befindliche Wassermenge gesteuert und geregelt werden. Beispielsweise ist hierfür eine Steuerung vorgesehen, die beispielsweise in der unten beschriebenen Energiemanagementeinheit integriert ist.

Gemäß einem weiteren Ausführungsbeispiel der vorliegenden Erfindung weist das Frischwassermodul eine Ejektorpumpe, beispielsweise eine Wasserstrahlpumpe, zur Angleichung eines Druckniveaus einer Ausgangsseite an ein Druckniveau einer Eingangsseite des Kondensators auf.

Gemäß der vorliegenden Erfindung weist das Brennstoffzellensystem eine Energiemanagementeinheit zur Steuerung einer Saugleistung des Saugmoduls auf, so dass die Saugleistung unabhängig von einer Flughöhe des Luftfahrzeugs einstellbar ist.

So kann die Energiemanagementeinheit beispielsweise ein oder mehrere Ventile steuern oder regeln, welche den Abwasser Separator des Saugmoduls mit der Außenluft verbinden. Weiterhin kann die Energiemanagementeinheit an einen Generator oder eine Pumpe angeschlossen sein, der bzw. die die Saugleistung bereitstellen, wenn der Außendruck zu hoch sein sollte.

Gemäß einem weiteren Ausführungsbeispiel der vorliegenden Erfindung ist das Saugmodul weiterhin zum Versorgen eines zu inertisierenden Raumes des Luftfahrzeugs mit sauerstoffabgereicherter Luft aus dem Versorgungsmodul ausgeführt.

Die sauerstoffabgereicherte Luft wird hierbei von der Brennstoffzelleneinheit erzeugt (welche ja Luftsauerstoff verbraucht). Diese sauerstoffabgereicherte und stickstoffangereicherte Luft kann dann zum Inertisieren eines Raumes des Luftfahrzeugs bzw. zur Brandbekämpfung oder Brandvermeidung verwendet werden. Beispielsweise kann diese Luft einem Treibstofftank zugeführt werden oder gezielt zur Brandbekämpfung eingesetzt werden. Hierfür sind ggf. weitere Leitungen vorgesehen, über welche die sauerstoffabgereicherte Luft gezielt einem Brandherd zugeführt werden kann.

Gemäß einem weiteren Ausführungsbeispiel der vorliegenden Erfindung weist das Brennstoffzellensystem weiterhin eine Druckregelung und einen Auslass zur Außenluft des Luftfahrzeugs auf, welche in dem zu inertisierenden Raum angeordnet sind. Weiterhin ist eine Leitung zum Verbinden des Saugmoduls mit dem zu inertisierenden Raum vorgesehen, über welche die sauerstoffabgereicherte Luft dem Raum zugeführt werden kann.

Gemäß einem weiteren Ausführungsbeispiel der vorliegenden Erfindung weist das Brennstoffzellensystem weiterhin einen Sauerstoffsensor zur Messung eines Sauerstoffgehalts im Kathodenabgas der Brennstoffzelleneinheit auf. Auf diese Weise kann beispielsweise festgestellt werden, ob die von der Brennstoffzelleneinheit ausgegebene Abluft für einen Löschvorgang oder zum Inertisieren des Raumes verwendet werden kann (ob also der Sauerstoffgehalt ausreichend niedrig ist).

Ggf. kann die Leistung der Brennstoffzelle erhöht werden, so dass sich der Sauerstoffanteil der Abluft senkt.

Zur Erläuterung der vorliegenden Erfindung ist ein Verfahren zum Betrieb eines Brennstoffzellensystems für ein Luftfahrzeug angegeben, bei welchem Sauerstoff durch eine Brennstoffzelleneinheit hindurchgesaugt wird. Dieser Saugvorgang wird durch ein Saugmodul ermöglicht. Weiterhin werden Frischwasser und elektrische Energie durch ein Versorgungsmodul erzeugt, wobei das Versorgungsmodul eine Brennstoffzelleneinheit aufweist.

Gemäß der vorliegenden Erfindung ist ein Flugzeug mit einem oben beschriebenen Brennstoffzellensystem angegeben.

Zur Erläuterung der vorliegenden Erfindung ist die Verwendung eines oben beschriebenen Brennstoffzellensystems in einem Flugzeug angegeben.

Es ist zu beachten, dass die im Hinblick auf das Brennstoffzellensystem beschriebenen Ausführungsbeispiele der Erfindung auch für das Verfahren, die Verwendung und das Flugzeug gelten.

Weitere Ausführungsbeispiele und Vorteile der Erfindung ergeben sich aus der folgenden Figurenbeschreibung.
Fig. 1 zeigt eine schematische Darstellung eines Brennstoffzellensystems gemäß einem Ausführungsbeispiel der vorliegenden Erfindung.
Fig. 2 zeigt eine schematische Darstellung eines Brennstoffzellensystems gemäß einem weiteren Ausführungsbeispiel der vorliegenden Erfindung.
Fig. 3 zeigt eine schematische Darstellung eines Vakuum-Toilettensystems, welches Teil des Brennstoffzellensystems gemäß einem Ausführungsbeispiel der vorliegenden Erfindung bildet.
Fig. 4 zeigt eine schematische Darstellung eines Flugzeugs gemäß einem Ausführungsbeispiel der vorliegenden Erfindung.

Im Folgenden werden mit Verweis auf die Figuren bevorzugte Ausführungsbeispiele der vorliegenden Erfindung beschrieben.

In der folgenden Figurenbeschreibung werden für die gleichen oder ähnlichen Elemente die gleichen Bezugsziffern verwendet. Die Darstellungen in den Figuren sind schematisch und nicht maßstäblich.

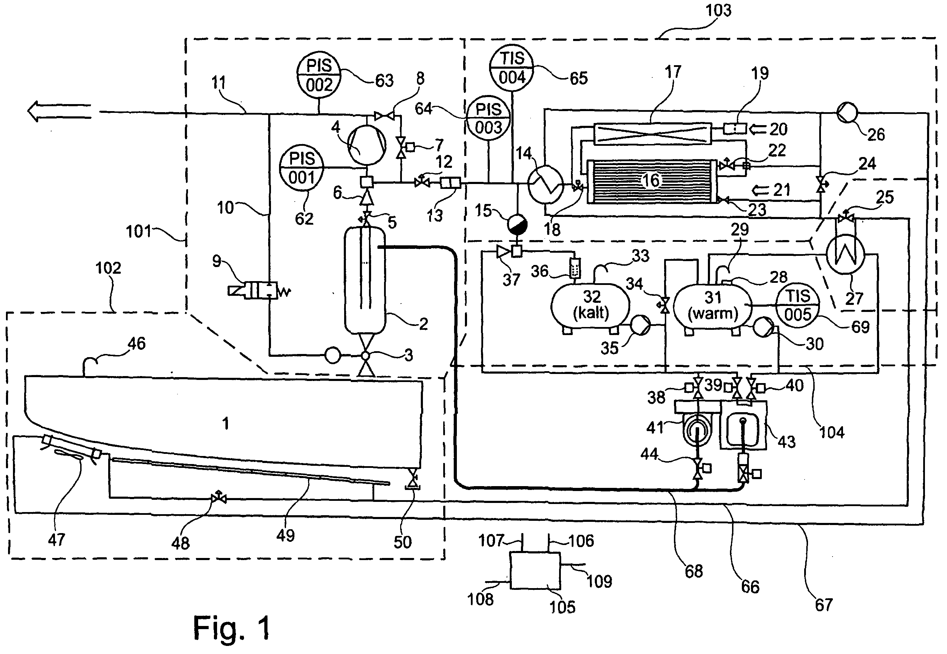

Fig. 1 zeigt eine schematische zweidimensionale Darstellung eines Brennstoffzellensystems gemäß einem Ausführungsbeispiel der vorliegenden Erfindung. Das Brennstoffzellensystem weist im Wesentlichen ein Saugmodul 101, ein Lagermodul 102, ein Versorgungsmodul 103 und ein Frischwassermodul 104 auf.

Die vorliegende Erfindung kombiniert die Brennstoffzelleneinheit bzw. den Brennstoffzellenstapel 16 mit einem Vakuumsystem, wie es in Flugzeugen verwendet wird. In der dargestellten Anordnung wird die Funktion eines Kompressors durch den Vakuum-Generator 4 bzw. den Außenluftanschluss 11 ersetzt. Auf diese Weise wird der zur Reaktion mit Wasserstoff in der Brennstoffzelle erforderliche Sauerstoff aus dem druckbeaufschlagten Kabinenbereich, über einen Feuchte-Wärmetauscher zur Vorbefeuchtung, durch die Brennstoffzelle 16 hindurch gezogen. Der Feuchte-Wärmetauscher kann dabei sowohl ein externes Bauteil wie auch eine in dem Brennstoffzellenstapel 16 integrierte Einheit sein.

Die Vorteile dieser Anordnung liegen in dem völligen Verzicht auf einen zusätzlichen Kompressor für das Brennstoffzellensgstem, der dadurch auftretenden Gewichtseinsparung, der Vermeidung zusätzlicher Verschleißteile und der Erhöhung der Gesamtzuverlässigkeit.

Ein weiterer Vorteil entsteht aus den in der Regel auftretenden Betriebsarten des Systems. Das Brennstoffzellensystem kann von der Größe und Auslegung so gewählt werden, dass die abzugebende Wassermenge direkt dem Bedarf der Kabinensysteme angepasst ist. Die dadurch generierte Energie kann dann vollständig die im Reiseflug auftretenden Bedarfe abdecken. Der im Steig- und im Sinkflug sowie am Boden vorhandene Minderbedarf an Wasser und an elektrischer Energie wird durch das Brennstoffzellensystem automatisch so kompensiert, so dass das in geringeren Flughöhen kleiner werdende Druckgefälle zwischen Kabine und Außenluft zu einer geringeren Stoff-Umsetzungsrate in der Brennstoffzelle 16 führt und sich dadurch automatisch die abgebbare Leistung vermindert.

Für den Fall, dass das Energiemanagement 105 des Luftfahrzeugs dennoch elektrische Leistung abfordert, besteht die Möglichkeit, über den Vakuum-Generator 4 den Luftstrom wieder zu erhöhen und so die Leistung des Systems unabhängig von der Flughöhe zu steigern.

Ein weiterer Aspekt der Erfindung betrifft den Wasseraustrag aus der im Verhältnis zum Kabinendruck mit Unterdruck laufenden Brennstoffzelleneinheit 16. Da bei den beschriebenen Druckverhältnissen ein Wasseraustrag mittels eines Kondensatableiters üblicher Bauart nicht immer funktioniert, sind die Ausgangsseite und die abzuleitende Seite des Kondensatableiters im Druckniveau aneinander angeglichen.

Hierzu wird eine in einem Wasserkreis integrierte Ejektorpumpe (beispielsweise Wasserstrahlpumpe) 6 verwendet, die auf ihrer Saugseite den gleichen Druck aufweist, wie das Systemdruck der Brennstoffzelleneinheit 16 am Kondensatableiter, so dass dieser bei anfallendem Wasser öffnen kann. Die Regelung des Druckniveaus des Wasserkreises findet über seine Umwälzpumpe 30 statt.

Die Anordnung beinhaltet zudem zwei Wasserkreise, einen Kaltwasserkreis und einen Warmwasserkreis. Dabei wird der Warmwasserkreis mit der bei der Kondensation anfallenden Abwärme beheizt. Bei dieser Kondensation handelt es sich um das Auskondensieren von Wasser aus dem Brennstoffzellenabgas. Dadurch können die heute üblichen Wasserheizer in den Waschräumen und Galleys vollständig eingespart werden, was einen weiteren Gewichts- und Wartungsvorteil bringt.

Andererseits besitzt der Warmwasserkreis im Puffertank 31 einen vorzugsweise elektrischen Zusatzheizer oder einen Wärmetauscher, so dass das Kühlwasser der Brennstoffzelle 16 über einen Wärmetauscher zwischen dem Warmwasserkreis und dem Kühlwasserkreis vorgeheizt werden kann, um entweder die Brennstoffzelle schneller auf Betriebstemperatur zu bringen oder andererseits ein Einfrieren der Brennstoffzelle bei Frost zu verhindern.

Statt oder zusätzlich zu einem elektrischen Heizelement kann an dieser Stelle auch ein Wärmetauscher eingesetzt werden, der die Abwärme eines anderen Systems nutzt. Als Beispiel ist hier die Abwärme aus elektrischen Geräten zu nennen.

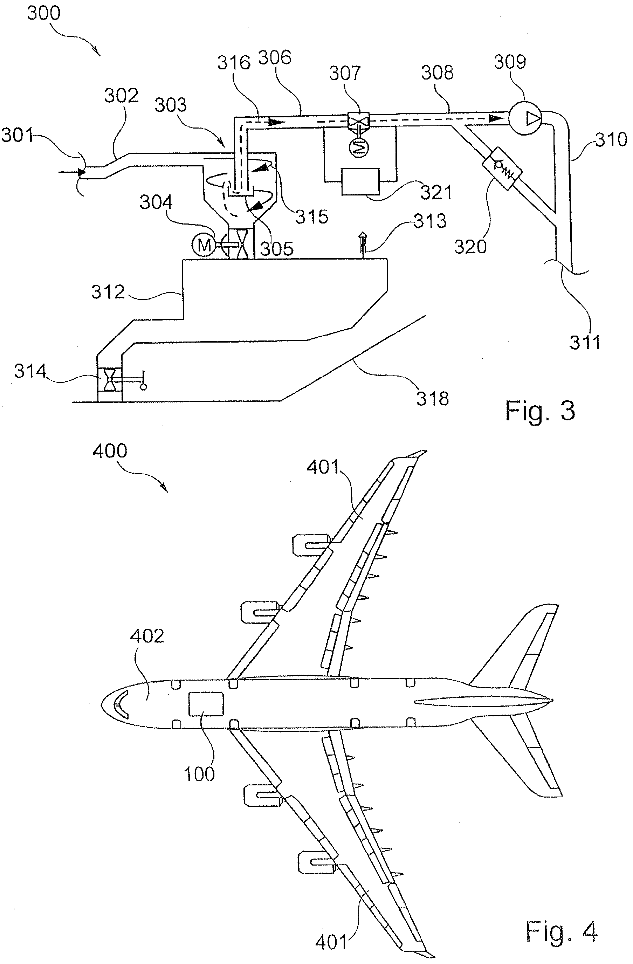

Unter Vakuum ist bei Vakuum-Abwassersystemen im herkömmlichen Sinne der Differenzdruck zwischen Umgebung der Bordtoilette und dem Abwassertank (Vakuumtank bzw. Separator 2) bzw. einer vergleichbaren Anordnung zu verstehen. Im vorliegenden Fall wird der Vakuumtank durch ein sog. Saugmodul 101 ersetzt, welches in seiner Funktion einem Abwassertransporttank entspricht. Ein solcher Transporttank wird im Folgenden unter Bezugnahme auf Fig. 3 beschrieben.

Ein Kernstück der Erfindung ist das Saugmodul 101, welches eine Kombination aus einem sog. Zyklon-Abwasser Separator 2, einem Vakuum-Generator 4, einer

Ejektorpumpe 6, einem pneumatischen Ablassventil 3, einem Bypass mit Ventil 7 und Rückschlagklappe 8, einem Regelventil für den Vakuum transport 5, einem Regelventil für den Luftstrom durch die Brennstoffzelle 12, einer Vakuumsteuerleitung 10 mit einem Steuerventil 9, drei Drucksensoren (PIS001, PIS002, PIS003) 62, 63, 64, einem Temperatursensor (TIS004) 65 und einem Keimfilter 13 aufweist.

Weiterhin ist ein Außenbordventilierungsanschluss 11 vorgesehen, welcher das Saugmodul 101 mit der Außenluft verbindet.

Das Regelventil 5 ist hierbei zwischen der Ejektorpumpe 6 und dem Separator 2 angeordnet. Nach der Ejektorpumpe 6 gabelt sich die Leitung. Der erste Teil führt zum Vakuum-Generator 4 und über den Drucksensor 63 und den Außenbordventilierungsanschluss 11 zum Außenbereich des Flugzeugs. Andererseits führt der zweite Leitungsast über das Regelventil 12 und dem Keimventil 13 zum Versorgungsmodul 103. Auf diesem Weg ist der Drucksensor 64 sowie der Temperatursensor 65 vorgesehen. Im ersten Leitungsast ist der erste Drucksensor 51 angebracht (beispielsweise direkt vor dem Vakuum-Generator 4). Die beiden Leitungsäste sind (nach dem Vakuum-Generator 4) über ein Rückschlagventil 8 und einem Bypassventil 7 miteinander verbunden.

Weiterhin besteht eine Verbindung zwischen dem Außenbordventilierungsanschluss 11 und dem Abwasserventil 3 (das zwischen dem Separator 2 und dem Abwassersammeltank 1 angeordnet ist) in Form eines Steuerventils 9 und einer Steuerleitung 10.

Alle hier und im Folgenden genannten Ventile, Pumpen, Steuerungen und Regelungen können über eine zentrale oder mehrere einzelne Steuer- und Regeleinheiten gesteuert und geregelt werden.

Eine solche zentrale Steuereinheit ist beispielsweise die schematisch dargestellte Energiemanagementeinheit 105, welche an die vier Module 101, 102, 103 und 104 und deren entsprechende Steuerung, Ventile, Pumpen, Generatoren, Messfühler und dergleichen angeschlossen sein kann. Hierfür sind die angedeuteten Leitungen 106. 107. 108 und 109 vorgesehen. Die Kommunikation kann auch drahtlos erfolgen.

Das Saugmodul 101 wird über das Ablassventil 3 mit einem Lagermodul 102 verbunden. Das Lagermodul 102 umfasst einen Abwasser-Lagertank oder Abwassersammeltank 1, eine Entlüftung 46, eine Drainagevorrichtung 50, eine Heiz-Kühlkombination mit Bypass 47, 48, 49.

Das Abwasserdrainageventil 50 befindet sich beispielsweise an der Unterseite des Sammeltanks 1. Die Heiz-Kühlkombination mit Bypass umfasst einen Außenluftkühler 47, ein Kühlwasserbypassventil 48 sowie einen Einfrierschutzlagertank 49. Das Kühlwasserbypassventil 48 dient der Umgehung des Lagertanks 49. Die Leitung 66 führt vom Lagertank 49 bzw. vom Bypassventil 48 zum Wärmetauscher 27 bzw. zur Bypassregelung des Warmwasserwärmetauschers 25.

Der Außenluftkühler 47 ist zwischen dem Einfrierschutzlagertank 49 und, über die Leitung 67, die Kühlwasserpumpe 26 angeschlossen.

Die Be- und Entlüftung 46 sitzt beispielsweise auf dem Abwassersammeltank 1.

Das Saugmodul 101 und das Lagermodul 102 bilden zusammen mit der Bordtoilette 41 und dem Waschbecken 43 sowie den dazugehörigen Ventilen 38 (Frischwasserspülventil), Kaltwasserventil 39 und Warmwasserventil 40 das Vakuumsystem. Hierbei ist die Anzahl der Waschbecken und WCs beliebig.

Die Bordtoilette 41 (WC-Schüssel) ist über das Vakuumspülventil 44 und die Leitung 68 mit dem Separator 2 verbunden. Ebenso ist das Waschbecken 43 über die Vakuumtransfereinheit 45 (mit entsprechendem Ventil) über die Leitung 68 mit dem Separator 2 verbunden.

Das dritte Modul ist das Versorgungsmodul 103 zur Erzeugung von Frischwasser und elektrischer Energie. Dieses Versorgungsmodul 103 weist einen Brennstoffzellenstapel 16, einen Feuchte-Wärmetauscher 17, ein anodenseitiges Purge-Ventil 18, einen zuluftseitigen Keimfilter 19, eine Kabinenluft-Zuleitung 20, eine Wasserstoffzuführung 21, einen Kühlkreis mit Kühlmittelpumpe 26, ein Absperrventil 23, Regelventile 22, 24, einen Kondensator 14 mit Kondensatableiter 15 und einen Wärmetauscher 27 mit Regelventil 25 auf.

Auf der einen Seite ist der Brennstoffzellenstapel 16 an dem Wasserstoffeinlass 21 angeschlossen, der beispielsweise an einen Wasserstoffsammeltank oder anderen Wasserstoffspeicher angeschlossen ist. Weiterhin ist der Brennstoffzellenstapel 16 über das Regelventil der Kühlung 22 an den Kondensator 14, die Kühlwasserpumpe 26 und über die zusätzliche Bypassregelung der Kühlung 24 an den Warmwasserwärmetauscher 27 bzw. wieder den Kondensator 14 angeschlossen. Über das Ventil 23 kann eine Kühlwasserabsperrung erfolgen. Das Wasserstoff-Purgegas Ablassventil 18 verbindet die andere Seite des Brennstoffzellenstapels 16 mit dem Kondensator 14 sowie dem Feuchte-Wärmetauscher 17. Weiterhin ist über den Kondensatableiter 15 eine Verbindung zwischen dem Kondensator 14 und dem Kaltwassertank 32 vorgesehen.

Kabinenluft 20 oder eine andere sauerstoffhaltige Gasmischung wird über den Partikel- und Keimfilter 19 an den Feuchte-Wärmetauscher 17 geleitet, wo die Luft aufgefeuchtet wird, bevor sie der Brennstoffzelle 16 zugeführt wird.

Das vierte Modul ist das Frischwassermodul 104. Das Frischwassermodul 104 umfasst zwei Wasserkreise, einen Kaltwasserkreis und einen Warmwasserkreis.

Zum Kaltwasserkreis gehören die Ejektorpumpe 37, die Aufsalzungs- und pH-Pufferungseinheit 36, der drucklose Pufferbehälter 32 mit Entlüftung 33 und Umwälzpumpe 35.

Aus dem Kaltwasserkreis wird über das Regelventil 34 der Warmwasserkreis gespeist. Hierzu gehören der drucklose Pufferbehälter 31 mit der Entlüftung 29 und dem elektrischen Zusatzheizstab 28 sowie der Temperaturfühler 69 (TIS005), der andererseits auch zum Versorgungsmodul gehörige Wärmetauscher 27 und die Umwälzpumpe 30.

Der Kaltwasserpuffertank 32 weist hierbei im oberen Bereich eine Be- und Entlüftung 33 auf. Weiterhin ist der Kaltwasserpuffertank 32 über den Keimfilter 36 und den Kondensatableiter 15 an den Kondensator 14 angeschlossen. Zur Speisung des Kreislaufes ist die Ejektorpumpe 37 vorgesehen. Die Bedruckung erfolgt durch die (Umwälz-)Pumpe 35.

Der Kaftwasserpuffertank 32 ist über die Umwälzpumpe des Kaltwasserkreises 35 und ein Befüllventil des Warmwasserkreises 34 an den Warmwasserpuffertank 31 angeschlossen. Ebenso ist der Kaltwasserpuffertank 32 über die Umwälzpumpe 35 an die Ejektorpumpe 37 angeschlossen, wodurch der Kaltwasserkreislauf geschlossen wird.

Der Warmwasserpuffertank 31 weist ebenfalls im oberen Bereich eine Be- und Entlüftung 29 auf sowie einen elektrischen Zusatzheizer 28. Weiterhin ist der Warmwasserpuffertank 31 an den Warmwasserwärmetauscher 27 angeschlossen.

Die Entnahmestellen sind direkt an die Wasserkreise angeschlossen und gehören zu den jeweiligen Waschbecken bzw. WC-Modulen 41, 43.

An den Waschbecken 43 sind dies üblicherweise die Wasserhähne (Mischarmaturen) mit jeweils einem Ventil für Kaltwasser 39 und einem für Warmwasser 40 sowie am Abfluss eine sog. Abwassertransfereinheit 45, welche das Abwasser in das Vakuumsystem entlässt.

An den Bordtoiletten 41 ist dies in der Regel ein Spülventil 38 für die Wasserspülung in das Vakuumsystem 44 zum Entsorgen der Fäkalien aus der Toilettenschüssel in das Vakuumsystem.

Das Gesamtsystem wird durch eine elektronische Steuereinheit 105, welche die Systemfunktionen steuert, ergänzt (auch Energiemanagementeinheit genannt).

Zusätzlich erfolgt eine Einspeisung der elektrischen Energie aus dem Brennstoffzellenstapel 16 in das Flugzeugbordnetz, beispielsweise über eine entsprechende Reglereinheit, die die Spannung und ggf. die Frequenz an das Bordnetz des Luftfahrzeugs anpasst.

Diese Reglereinheit kann auch in die Energiemanagementeinheit 105 integriert sein.

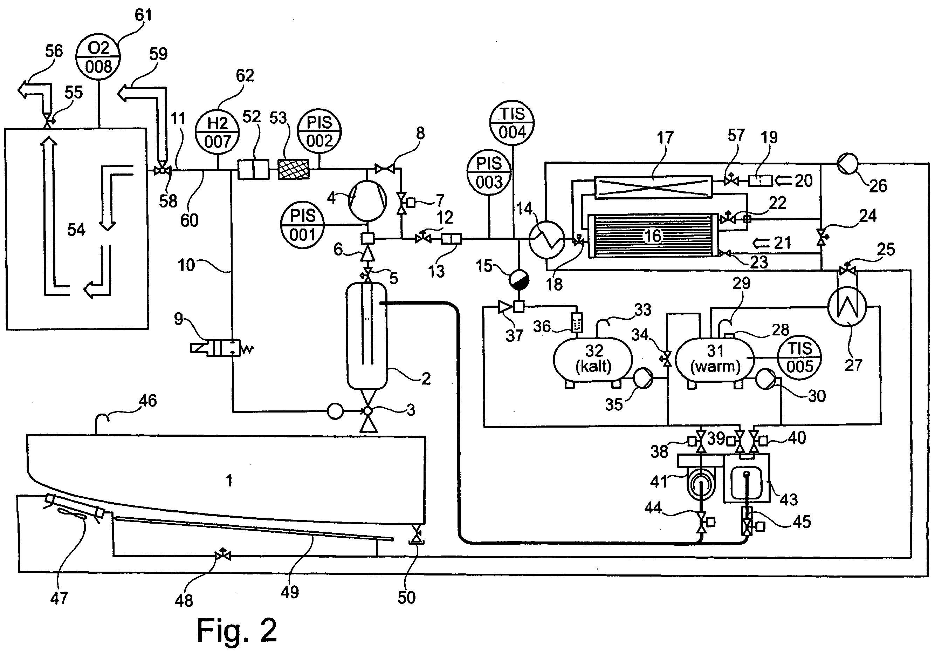

Fig. 2 zeigt eine schematische Darstellung eines Brennstoffzellensystems gemäß einem weiteren Ausführungsbeispiel der vorliegenden Erfindung.

Zusätzlich zu dem in Fig. 1 gezeigten System sind ein weiterer Keim- und Geruchsfilter 52, ein Katalysator 53 zur Umsetzung des Restwasserstoffs, ein Druckregelventilausgang 55, ein Auslauf 56, ein Druckregelventileingang 57, ein Dreiwegeventil 58, ein Bypass und ein Sauerstoffsensor vorgesehen. Auf diese Weise lässt sich ein Raum 54 inertisieren bzw. ein Brand löschen.

Unter anderem zum präventiven Brandschutz, zur Brandbekämpfung sowie zur Ruhigstellung von Personen oder zur Leistungssteigerung im Sportbereich sind Systeme bekannt, die den Sauerstoffpartialdruck innerhalb eines geschlossenen Raumes bzw. Luftvolumens derart reduzieren, dass diese Effekte erzielt werden können. Aus der DE 102 05 373 A1 ist ein Brandschutzsystem mit Brennstoffzelle beschrieben, wobei Sauerstoff in einem geschlossenen System in einer Brennstoffzelle umgesetzt wird, bis kein Sauerstoff mehr
vorhanden ist. Aus der DE 10 2005 053 692 B3 ist ein Brandbekämpfungssystem bekannt, welches Kathodenabluft von Brennstoffzellen nutzt.

Für die Inertisierung (Sauerstoffreduktion) der Raumluft wird der Raum mit der Kathodenabluft eines Brennstoffzellensystems, vorzugsweise eines Niedertemperaturbrennstoffzellensystems, beaufschlagt.

In dem in Fig. 2 gezeigten Ausführungsbeispiel der vorliegenden Erfindung wird die Luft durch den Brennstoffzellenstapel gesaugt. Der kathodenseitige Luftüberschuss bestimmt den Restsauerstoffgehalt im Kathodenabgas. Dieser Wert ist über ein Regelventil 57 am Kathodeneingang einstellbar. Der Restsauerstoffgehalt im Abgas wird über einen Sauerstoffsensor 60 gemessen und entsprechend über das Regelventil 57 eingestellt. Dies ist wichtig, da sonst die Sauerstoffmessung im Raum nicht dem Sauerstoff im Abgas entspricht. Daher ist diese Regelung für die Regelung des sog. Lambdawertes entscheidend.

Die Durchleitung der sauerstoffreduzierten Luft durch den zu inertisierenden Raum 54 erfolgt entweder durch ein Druckgefälle zwischen der Raumluft am Ausgang und dem brennstoffzellenseitigen Kathodeneingang oder über ein Druckgefälle zwischen einem zu einem anderen System gehörenden Vakuum-Generator und dem brennstoffzellenseitigen Kathodeneingang. Die Druckseite des Vakuum-Generators beaufschlagt den zu inertisierenden Raum 54 und diese Luft wird dann mit Drucküberschuss nach außen geleitet.

Vorteilhafterweise findet diese Anordnung in Luftfahrzeugen Anwendung, wo mit der Kathodenabluft beispielsweise Tanks, Frachträume oder Elektronikcompartments inertisiert werden können. Der oben genannte Vakuum-Generator kann durch das Flugzeugvakuum-Abwassersystems ergänzt oder ersetzt werden.

Die dargestellte Anordnung kombiniert Systemelemente der beiden Einzelsysteme Brennstoffzelleneinheit (Brennstoffzellenstack) und Vakuumabwassersystem. Die Anordnung ermöglicht die Inertisierung von Räumen über ein solches System sowie den Betrieb dieses Systems über Saug- oder Druckkräfte.

Aufgrund des Druckgefälles zwischen der Abluft des zu inertisierenden Raumes und der Zuluft zur Brennstoffzelle wird sauerstoffhaltige Luft durch die Brennstoffzelle gesaugt. Die Brennstoffzellenabluft strömt dann in den zu inertisierenden Raum.

Diese Randbedingungen sind z. B. bei Luftfahrzeugen in Reiseflughöhe gegeben, wenn die Zuluftseite innerhalb der Druckkabine angeordnet ist und die Abluftseite auf die Flugzeugumgebung gerichtet ist.

Im Falle eines zu geringen Druckgefälles, wie z. B. am Boden oder in geringen Flughöhen, wird ein zwischengeschalteter Vakuum-Generator 4 so eingesetzt, dass die Saugseite auf die Kathodenabluft des Brennstoffzellensystems gerichtet ist und die Druckseite auf den zu inertisierenden Raum.

Die Verwendung des Vakuum-Generators 4, beispielsweise eines Vakuumabwassersystems, erfordert besondere Maßnahmen, um Geruchsbelästigungen und Verkeimungs- und Gesundheitsrisiken aus dem Abwassersystem zu vermeiden. Hierzu ist zwischen dem Vakuum-Generator und dem zu inertisierenden Raum ein Geruchs- und Keimfilter installiert.

Dieser Keim- und Geruchsfilter ist mit Bezugszeichen 52 bezeichnet.

Mit Hilfe des Dreiwegeventils 58 und des Bypasses 59 ist es möglich, den zu inertisierenden Raum zu umgehen. Ist der Druck im zu inertisierenden Raum 54 zu hoch, öffnet das Druckregelventil 55 den Auslass 56, so dass Luft aus dem Raum abgelassen werden kann. Der Sauerstoffgehalt des Raumes kann über den Sauerstoffsensor 61 gemessen werden.

Der zu inertisierenden Raum 54 besitzt einen Auslass 56 mit einer Druckregelung 55, um den Innendruck des Raumes und die Durchströmung der Brennstoffzelle mit Luft zu gewährleisten. Im Flugzeugbetrieb kann diese Druckregelung durch das so genannte Outflow Valve realisiert werden, einer Vorrichtung, die beispielsweise zur Druckregelung einer Flugzeugkabine eingesetzt wird. Insgesamt ist das System zwischen Regelung am Kathodeneingang der Brennstoffzelle und Outflow Valve so zu regeln, dass im zu inertisierenden Raum ein konstantes Druckniveau erreicht wird.

Dieses Druckniveau hat in einem Luftfahrzeug in Reiseflughöhe Prinzip bedingt einen Wert zwischen Kabinendruck und Außenluftdruck, am Boden und in niedrigen Flughöhen, d.h. bei Vakuum Generator Betrieb einen Wert oberhalb des Kabinendrucks und des Außenluftdrucks.

Je nach Nutzung des zu inertisierenden Raumes 54, z. B. als Lagervolumen für Treibstoff oder als Elektronik Abteil, ist es vorteilhaft die Kathodenabluft der Brennstoffzelle zu trocknen. In einer Anwendung in einem Luftfahrzeug kann der durch das Trocknen der aus der Kathodenabluft gewonnene Wasseranteil zur Nutzung im bordeigenen Trinkwassersystem bereitgestellt werden.

Der Bedarf an sauerstoffarmer Luft für ein bestimmtes Raumvolumen ist konstant. Die vorliegende Anordnung erfordert somit ein Brennstoffzellensystem, welches mit einer relativ konstanten Grundlast in das elektrische Bordnetz eingebunden ist. Die konstante Grundlast entspricht auch einem konstanten Sauerstoffumsatz. Wie beschrieben entspricht dann der Kathodenseitige Luftüberschuss dem Restsauerstoffgehalt im Abgas der Brennstoffzelleneinheit, bei konstantem Sauerstoffumsatz. Damit wird bei entsprechender Auslegung ein sehr wirtschaftlicher Betrieb des Systems ermöglicht.

Das Saug-/Druckmodul 101 ist mit dem zu inertisierenden Raum 54 verbunden, wobei der Raum eine Druckregelung 55 und einen Auslass 56 zur Außenluft aufweist, einen 02 Sensor 61 (02 006), einen Bypass 59 über ein Wegeventil 58 sowie einen Wasserstoffsensor 62 (H2 007).

Im Kathodenabgas befindet sich ebenfalls ein Sauerstoffsensor 60, damit die Regelung des Sauerstoffgehaltes darüber gemessen werden kann.

Fig. 3 zeigt hierbei eine schematische zweidimensionale Schnittdarstellung durch das erfindungsgemäße Vakuum-Toilettensystem 300 gemäß eines Ausführungsbeispiels der vorliegenden Erfindung. Das Spülventil der Toilette 301 stellt die Verbindung zwischen dem Toiletten-/Kabinenbereich und dem Bereich mit dem restlichen System dar. Dieser restliche Bereich kann sich hinter oder unter dem Kabinenbereich befinden. An diesem Spülventil 301 tritt in bisherigen Lösungen für Vakuum-Toilettensysteme ein sog. Vakuumknall auf, der durch die vorliegende Erfindung eliminiert werden kann. Der Grund dafür ist der große Druckunterschied, der direkt an dem Spülventil anliegt. Da die vorliegende Erfindung wahlweise auch in dem Betrieb eines herkömmlichen Vakuum-Toilettensystems arbeiten kann, ist das Spülventil derart ausgestaltet, dass es dem entsprechenden Druckunterschied standhält. Von diesem Spülventil geht eine erste Leitung 302 zum Abwasser-Transporttank 303. Diese Leitung ist druckfest ausgestaltet, wobei druckfest bedeutet, dass sie dem zu erwartenden Druckunterschied, der für den Abtransport des Abwassers nötig ist, standhält. Nun ist eine zweite Leitung 306 angegeben, die vom Abwasser-Transporttank 303 zur Außenbordbelüftung 307 geht. Ebenso wird die Außenbordbelüftung 307 durch eine weitere Leitung 308 mit dem Vakuumgenerator 309 verbunden. An diesen Vakuumgenerator 309 schließt weiterhin eine Leitung 310 bis hin zur Außenhaut 311 des Flugzeugs an. Diese genannten Leitungen sind alle in druckfester Form ausgestaltet. Ebenso ist der Abwasser-Transporttank 303 so in Form und mit einem Material ausgestaltet, dass er dem Druckunterschied standhält. Dabei kann der Abwasser-Transporttank in Form eines Zyklon-Abscheiders ausgeführt sein, um eine Trennung des Luftstromes, der von der Toilette herkommt von flüssigen und festen Bestandteilen innerhalb des Abwasser-Transporttanks zu gewährleisten. Der Luftstrom kann nun weiter über die Leitungen 306, 308 und 310 nach außenbords entweichen. Durch den tangentialen Eintritt des Abwassers in den Abwasser-Transporttank im Falle eines Zyklon-Abscheiders wird die Trennung des Abwassers vom Luftstrom gewährleistet. Dies bietet den weiteren Vorteil, dass kein weiterer Einschlagschutz mehr eingebaut werden muss, um schlagkräftige Gegenstände, wie Batterien, am Durchtritt durch das System zu hindern. Dies bietet einen Gewichtsvorteil gegenüber den herkömmlichen Lösungen von Abwasseraufbewahrungstanks in Vakuum-Toilettensystemen.

Aufgrund der Trennung der beiden Funktionen "Transport des Abwassers" und "Sammlung des Abwassers" kann das Volumen des Abwasser-Transporttanks auf ein minimales Volumen begrenzt werden. Dieses minimale Volumen kann beispielsweise das zu erwartende Volumen von zwei Spülvorgängen betragen. Dies ist ein weiterer Gewichtsvorteil der vorliegenden Erfindung gegenüber herkömmlichen Lösungen. Der Abwasser-Transporttank kann aber auch wie ein konventioneller Flugzeugabwassertank ausgestaltet sein. Dabei muss eine Trennvorrichtung 305 vorgesehen sein, um zu verhindern, dass flüssige und feste Bestandteile des Abwassers in die Leitung 306 eintreten können. Das Abwassertank-Separator-Ventil 304 ist hier beispielhaft unter dem Abwasser-Transporttank 303 angebracht. Dabei ist dieses Ventil auch druckfest ausgestaltet, da es während des Transports des Abwassers im Abwasser-Sammeltank dem wirkenden Druckunterschied ausgesetzt ist. Dadurch kann verhindert werden, dass Kräfte, die von dem Druckunterschied herrühren, auf den Abwasser-Sammeltank 312 wirken. Dabei regelt das Abwassertank-Separator-Ventil den Transport des Abwassers vom Abwasser-Transporttank 303 in den Abwasser-Sammeltank 312. Da beide Tanks zum Zeitpunkt des Transports des Abwassers von dem Abwasser-Transporttank in den Abwasser-Sammeltank unter Kabinendruck stehen, geschieht dieser Austausch völlig drucklos. Beispielsweise ist der Austausch allein durch Schwerkraft zu gewährleisten. Der Abwasser-Sammeltank hingegen kann als konformer, druckloser Sammeltank für Abwasser ausgestaltet sein, da er stets unter Kabinendruck steht. Dies ermöglicht eine Formanpassung des Abwasser-Sammeltanks an seine Umgebung, beispielsweise den Flugzeugrumpf. Dies wiederum hat eine optimale Raumausnutzung und Integrationsfähigkeit des Abwasser-Sammeltanks zur Folge.

Da zu keinem Zeitpunkt ein Druckunterschied auf den Abwasser-Sammeltank wirkt, ist es möglich, ihn in einer Leichtbauweise auszugestalten. Jedoch schließt das die Möglichkeit nicht aus, ihn in herkömmlicher Materialausführung und Form zu verwenden. Jedoch kommt der möglichen Leichtbauweise gerade in Zeiten großer Anstrengungen, Großraumflugzeuge leichter gestalten zu können, eine besondere Bedeutung zu. Ein Drainage-Ventil 314 ist am unteren Ende des Abwasser-Sammeltanks 312 angebracht. Damit ist jeglicher Verschluss gemeint, der derart ausgestaltet ist, dass eine Leerung des Abwasser-Sammeltanks beispielsweise während eines Bodenaufenthalts ermöglicht wird. Da der Abwasser-Sammeltank 312 gegenüber der Kabine belüftet ist, ist er mit einem Geruchsverschluss 313 versehen, um Geruchsbelästigung im Kabinenbereich zu vermeiden.

Ein Spülvorgang, der durch diese beispielhafte Ausgestaltung der vorliegenden Erfindung ermöglicht wird, bei dem sowohl der sog. Vakuumknall vermieden werden kann als auch ein konformen, druckloser Abwassersammeltank verwendet werden kann, wird mit den beschriebenen Elementen folgendermaßen geschildert: Im Ruhezustand des Vakuum-Toilettensystem ist das Spülventil der Toilette, die Außenbordbelüftung und das Abwassertank-Separator-Ventil geschlossen. In den Leitungen und in dem Abwasser-Transporttank herrscht Kabinendruck. In den Leitungen ab der Außenbordbelüftung 307, also in der Leitung 308 und 310, herrscht Außendruck. Erfolgt eine Spülanfrage in der Toilette, so prüft ein Kontrollgerät 321, ob ausreichend Kabinendruckdifferenz vorhanden ist. Dabei ist mit Kabinendruckdifferenz der Druckunterschied zwischen dem Kabinendruck und dem Außendruck gemeint. Wird ein Mindestdruckunterschied unterschritten, so wird der Vakuumgenerator 309 eingeschaltet. Dieser erzeugt einen Unterdruck in den Leitungen vor der Außenbordbelüftung 307, also im Bereich der Leitung 308. Zunächst öffnet nun das Spülventil der Toilette 301. In den Leitungen bis zur Außenbordbelüftung und dem Abwasser-Transporttank herrscht nach wie vor Kabinendruck. Nun wird die Außenbordbelüftung 307 geöffnet. Die Druckdifferenz zwischen der Kabine und der Umgebung bewirkt einen Luftstrom von der Toilette her über die Leitungen durch den Abwasser-Transporttank hindurch nach außenbords. Dieser Luftstrom ist die Ursache des Transports des Abwassers in den Abwasser-Transporttank. Da der Abwasser-Transporttank 303 in Form eines Zyklonabscheiders konstruiert ist, und das Abwasser tangential in diesen Zyklonabscheider eintritt, werden feste und flüssige Bestandteile von dem Luftstrom getrennt und verbleiben im Abwasser-Transporttank. Es ist allerdings auch eine andere Bauart dieses Abwasser-Transporttanks denkbar. So könnte der Transporttank wie konventionelle Flugzeugabwassertanks gestaltet sein. Da der Abwasser-Transporttank nur das Volumen von maximal zwei Spülvorgängen aufnehmen können muss, kann er in seinem Volumen stark reduziert gegenüber konventionellen Lösungen ausgestaltet sein. Nach einer Zeit, die ausreichend für den Abtransport des Abwassers in den Abwasser-Transporttank ist, wird die Außenbordbelüftung geschlossen. Es stellt sich somit in dem System von der Toilette bis zur Außenbordbelüftung wieder Kabinendruck ein, da das Spülventil der Toiletten noch geöffnet ist. Um evtl. Geruchsbelästigungen im Kabinenbereich zu vermeiden, wird nun wieder das Toilettenspülventil 301 geschlossen. Nun erfolgt der Transport des Abwassers vom Abwasser-Transporttank 303 in den Abwasser-Sammeltank 312 mittels des nun zu öffnenden Abwassertank-Separator-Ventils 304. Da nun beide Tanks 303 und 312 unter Kabinendruck stehen, ist gewährleistet, dass dieser Transport ohne jeglichen Druckunterschied arbeitet. Beispielsweise gelangt das Abwasser unter Schwerkrafteinfluss in den Abwasser-Sammeltank. Dieser Abwasser-Sammeltank ist zu jeder Zeit gegenüber der Kabine belüftet und mit einem Geruchsverschluss 313 versehen. Ist das Abwasser vollständig in den Abwasser-Sammeltank gelangt, schließt das Abwassertank-Separator-Ventil wieder und das System geht in den Ruhezustand über. Letztlich sei noch angemerkt, dass der Druckunterschied zwischen dem Spülventil der Toilette und der Außenbordbelüftung für den Transport des Abwassers verantwortlich ist, wobei dieser Druckunterschied genau der Druckdifferenz zwischen Kabinendruck und Außendruck entspricht. Diese Druckdifferenz kann jedoch auch durch die Ventile 58 bzw.55 auf einen geringeren Wert eingeregelt werden. Weiterhin sei angemerkt, dass das System so eingerichtet werden kann, dass bei einer Spülanfrage zuerst die Außenbordbelüftung öffnet und somit der ganze Leitungsstrang Umgebungsdruck aufweist. Im nächsten Schritt kann nun das Spülventil der Toilette geöffnet werden. Danach läuft dieser alternative Spülmodus wie oben beschrieben ab. Diese Spülmodusvarianz kann beispielsweise dann zum Einsatz kommen, wenn festgestellt würde, dass der sog. Vakuumknall vorteilhaft für den Abtransport des Abwassers ist. Aufgrund der Möglichkeit zwischen beiden Spülsequenzen auszuwählen, kann je nach Flugphase des Flugzeuges der eine oder andere Spülmodus gewählt werden. So ist z. B. bei einem Reiseflug über Nacht der Spülmodus, der den Vakuumknall vermeidet, wählbar. Ebenso sei angemerkt, dass die beispielhafte Ausführung der vorliegenden Erfindung in Fig. 3 nur einen Abwasser-Transporttank 303 zeigt. Es ist allerdings auch möglich, an einen Abwasser-Sammeltank 312 mehrere unabhängige Subsysteme mit eigenen Toilettenleitungen und Abwasser-Transporttanks anzuschließen. Dies bietet den Vorteil einer Entkopplung der Entsorgungsvorgänge bei gleicher Nutzung eines Aufbewahrungstanks. Ebenso kann einer unterschiedlichen Nutzung von Subsystemen entgegengewirkt werden, bei der es unter Umständen zu einer früheren Abschaltung des Systems aufgrund eines vollen Abwasser-Sammeltanks kommen kann. Dabei zeigt Fig. 3 den Eintritt des Abwassers 315 in den Abwasser-Transporttank 303 und den Austritt des Luftstromes 316 durch die Leitungen 306 und 308.
Ferner kann ein Belüftungsleitungsrückschlagventil 320 eingebaut sein.

Fig. 4 zeigt eine schematische zweidimensionale Darstellung eines Flugzeugs gemäß einem weiteren Ausführungsbeispiel der vorliegenden Erfindung. Das Flugzeug 400 weist einen Rumpf 402 und Tragflächen 401 auf. Ebenso weist das Flugzeug 400 ein Brennstoffzeliensystem 100 gemäß der vorliegenden Erfindung auf, wobei das Brennstoffzellensystem beispielhaft im vorderen Rumpfbereich angeordnet ist. Eine Platzierung des Systems an anderen Stellen des Flugzeugs ist möglich. Auch kann das System in mehrere separate Einheiten aufgegliedert werden, welche an verschiedenen Stellen im Flugzeug angeordnet sind.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Abwasser Sammeltank
- 2: Separator
- 3: Abwasser Ventil
- 4: Vakuum Generator
- 5: Regelventil
- 6: Ejektor Pumpe
- 7: Bypass Ventil
- 8: Rückschlag Ventil
- 9: Steuer Ventil
- 10: Steuerleitung
- 11: Außenbord Ventilierungs-Anschluss
- 12: Regelventil
- 13: Keimfilter
- 14: Kondensator
- 15: Kondensat Ableiter
- 16: Brennstoffzellen Stack
- 17: Feuchte-Wärmetauscher
- 18: Wasserstoff-Purgegas Ablass Ventil
- 19: Partikel- und Keimfilter Für Lufteinlass
- 20: Kabinenluft
- 21: Wasserstoff Einlass
- 22: Regelventil Kühlung
- 23: Kühlwasser Absperrung
- 24: Bypass Regelung Kühlung
- 25: Bypass Regelung Warmwasser Wärmetauscher
- 26: Kühlwasser Pumpe
- 27: Warmwasser Wärmetauscher
- 28: Elektrischer Zusatzheizer
- 29: Be- und Entlüftung
- 30: Umwälzpumpe Warmwasser Kreis
- 31: Warmwasser Puffertank
- 32: Kaltwasser Puffertank
- 33: Be- und Entlüftung
- 34: Befüllventil Warmwasser Kreis
- 35: Umwälzpumpe Kaltwasser Kreis
- 36: Keimfilter
- 37: Ejektor Pumpe
- 38: Frischwasser Spülventil
- 39: Kaltwasser Ventil
- 40: Warmwasser Ventil
- 41: WC-Schüssel
- 42 43: Waschbecken
- 44: Vakuum Spülventil
- 45: Vakuum Wassertransfer Einheit
- 46: Be- und Entlüftung
- 47: Außenluft Küchler
- 48: Kühlwasser Bypass Ventil
- 49: Einfrierschutz Lagertank
- 50: Abwasser Drainage Ventil
- 51 52: Keim- und Geruchsfilter
- 53: Katalysator
- 54: inertisierter Raum
- 55: Druck Regelventil - Ausgang
- 56: Auslass
- 57: Druck Regelventil - Eingang
- 58: 3-Wegevenil
- 59: Bypass
- 60: Sauerstoffsensor

## Patentansprüche

1. Flugzeug mit einem Brennstoffzellensystem, das Brennstoffzellensystem aufweisend:
ein Versorgungsmodul (103) mit einer Brennstoffzelleneinheit (16);
ein Saugmodul (101) zum Saugen von Sauerstoff durch die Brennstoffzelleneinheit (16);
eine Energiemanagementeinheit zur Steuerung einer Saugleistung des Saugmoduls (101), so dass die Saugleistung unabhängig von einer Flughöhe des Luftfahrzeugs einstellbar ist;
einen Abwasser Separator (2);
ein Lagermodul (102) zum Sammeln des Abwassers aus dem Abwasser Separator (2), das Lagermodul (102) aufweisend eine Heiz-Kühlkombination mit einem Außenluftkühler (47) und einem Einfrierschutzlagertank (49);
einen Kühlkreis mit einer Kühlwasserpumpe (26);
einen Kondensator (14) zum Auskondensieren von Wasser aus Brennstoffzellenabgasen und zum Zuführen der beim Auskondensieren abfallenden Abwärme an den Kühlkreis;
wobei die Brennstoffzelleneinheit (16) an die Kühlwasserpumpe (26) angeschlossen ist und über den die Kühlwasserpumpe (26) enthaltenden Kühlkreis mit dem Kondensator (14) verbunden ist; und
wobei der Außenluftkühler (47) über eine Leitung (67) zwischen dem Einfrierschutzlagertank (49) und der Kühlwasserpumpe angeschlossen ist;
wobei das Saugmodul (101) zum Saugen von Sauerstoff durch die Brennstoffzelleneinheit den Abwasser Separator (2) aufweist, der als Drucktank ausgeführt ist und zur Erzeugung des erforderlichen Unterdruckes an die Luftfahrzeugumgebung angeschlossen ist, und der weiterhin zum Aufnehmen von Abwasser aus einer Bordtoilette oder einem Waschbecken ausgeführt ist.

2. Flugzeug nach Anspruch 1,
wobei Versorgungsmodul (103) zum Erzeugen von Frischwasser und elektrischer Energie ausgeführt ist.

3. Flugzeug nach Anspruch 1 oder 2,
wobei das Versorgungsmodul (103) einen Feuchte-Wärmetauscher (17) zur Vorbefeuchtung des durch die Brennstoffzelleneinheit (16) gesaugten Sauerstoffs aufweist.

4. Flugzeug nach einem der vorangehenden Ansprüche,
wobei das Lagermodul (102) einen Abwasser-Lagertank (1) aufweist, der stets einem Kabinendruck ausgesetzt ist.

5. Flugzeug nach Anspruch 4,
wobei das Saugmodul (101) und das Lagermodul (102) einen Teil eines Vakuumsystems für eine Bordtoilette ausbilden.

6. Flugzeug nach einem der vorhergehenden Ansprüche, weiterhin aufweisend:
ein Frischwassermodul (104) zum Speichern des von dem Versorgungsmodul (103) erzeugten Frischwassers;
wobei das Frischwassermodul (104) einen Kaltwasserkreis und einen Warmwasserkreis mit einem Wärmetauscher (27) aufweist;
wobei der Warmwasserkreis über den Wärmetauscher (27) mit einer bei einer Kondensation in einem Kondensator (14) im Versorgungsmodul (103) oder beim Betrieb eines elektrischen Verbrauchers abfallenden Abwärme beheizbar ist;
wobei der Kaltwasserkreis und der Warmwasserkreis zur Frischwasserversorgung im Luftfahrzeug ausgeführt sind.

7. Flugzeug nach Anspruch 6,
wobei der Kaltwasserkreis mit einem Regelventil zur Speisung des Warmwasserkreises ausgeführt ist.

8. Flugzeug nach Anspruch 7,
wobei das Frischwassermodul (104) eine Ejektorpumpe (37) zur Angleichung eines Druckniveaus einer Ausgangsseite an ein Druckniveau einer Eingangsseite des Kondensators (14) aufweist.

9. Flugzeug nach einem der vorhergehenden Ansprüche,
wobei das Saugmodul (101) weiterhin zum Versorgen eines zu inertisierenden Raumes (54) des Luftfahrzeugs mit sauerstoffabgereicherter Luft aus dem Versorgungsmodul (103) ausgeführt ist.

10. Flugzeug nach Anspruch 9, weiterhin aufweisend:
eine Druckregelung (55);
einen Auslass (56) zur Außenluft des Luftfahrzeugs;
eine Leitung zum Verbinden des Saugmoduls (101) mit dem zu inertisierenden Raum (54);
wobei die Druckregelung (55) und der Auslass (56) in dem Raum (54) angeordnet sind.

11. Flugzeug nach einem der vorhergehenden Ansprüche, weiterhin aufweisend:
einen Sauerstoffsensor zur Messung eines Sauerstoffgehaltes im Kathodenabgas der Brennstoffzelleneinheit (16).

## Claims

1. An aircraft having a fuel cell system, the fuel cell system comprising:
a supply module (103) having a fuel cell unit (16);
a suction module (101) for drawing oxygen through the fuel cell unit (16);
an energy management unit for controlling the suction performance of the suction module (101) so that the suction performance is adjustable independently of a flight altitude of the aircraft;
a waste water separator (2);
a storage module (102) for collecting the waste water from the waste water separator (2), the storage module (102) comprising a heating/cooling combination having an exterior-air radiator (47) and an antifreeze storage tank (49) ;
a coolant circuit with a coolant pump (26);
a condenser (14) for condensing water from fuel cell exhaust gases and for feeding of waste heat that arises during condensation to the coolant circuit;
wherein the fuel cell unit (16) is connected to the coolant pump (26), and to the condenser (14) by means of the coolant circuit comprising the coolant pump (26) ; and
wherein the exterior-air radiator (47) is connected between the antifreeze storage tank (49) and, by way of a line (67), the coolant pump (26);
wherein the suction module (101) comprises the waste water separator (2) for suction of oxygen through the fuel cell unit, which waste water separator (2) is designed as a pressure tank and is connected to the surrounding of the aircraft for generating the required negative pressure, and which is furthermore adapted for receiving waste water from an on-board toilet or wash basin.

2. The aircraft of claim 1,
wherein the supply module (103) is designed to produce fresh water and electrical energy.

3. The aircraft of claim 1 or 2,
wherein the supply module (103) comprises a humidity/heat exchanger (17) for pre-humidifying the oxygen drawn through the fuel cell unit (16).

4. The aircraft of any one of the preceding claims,
wherein the storage module (102) comprises a wastewater storage tank (1) that is always subject to cabin pressure.

5. The aircraft of any one of the preceding claims,
wherein the suction module (101) and the storage module (102) form part of a vacuum system for an on-board toilet.

6. The aircraft of any one of the preceding claims, further comprising:
a fresh-water module (104) for storing the fresh water generated by the supply module (103),
wherein the fresh-water module (104) comprises a cold-water circuit and a hot-water circuit with a heat exchanger (27);
wherein the hot-water circuit is heatable by way of the heat exchanger (27) by means of waste heat that arises during condensation in a condenser (14) in the supply module (103) or during operation of an electrical consumer;
wherein the cold-water circuit and the hot-water circuit are designed to supply fresh water in the aircraft.

7. The aircraft of claim 6,
wherein the cold-water circuit is designed with a regulating valve for feeding the hot-water circuit.

8. The aircraft of claim 7,
wherein the fresh-water module (104) comprises an ejector pump (37) for approximating the pressure level of an output side to the pressure level of an input side of the condenser (14).

9. The aircraft of any one of the preceding claims,
wherein the suction module (101) is furthermore designed to supply oxygen-depleted air from the supply module (103) to a space (54) in the aircraft, which space (54) is to be inerted.

10. The aircraft of claim 9, further comprising:
a pressure control device (55);
an outlet (56) to the exterior air of the aircraft;
a line for connecting the suction module (101) to the space (54) to be inerted;
wherein the pressure control device (55) and the outlet (56) are arranged in the space (54).

11. The aircraft of any one of the preceding claims, further comprising:
an oxygen sensor for measuring the oxygen content in a cathode exhaust gas of the fuel cell unit (16).

## Revendications

1. Avion comportant un système de pile à combustible, le système de pile à combustible présentant :
un module d'alimentation (103) comportant une unité de pile à combustible (16) ;
un module d'aspiration (101) pour aspirer de l'oxygène à travers l'unité de pile à combustible (16) ;
une unité de gestion de l'énergie destinée à commander une puissance d'aspiration du module d'aspiration (101), de telle sorte que la puissance d'aspiration est réglable indépendamment d'une hauteur de vol de l'aéronef ;
un séparateur d'eaux usées (2) ;
un module de stockage (102) destiné à collecter les eaux usées du séparateur d'eaux usées (2), le module de stockage (102) comportant une combinaison chaud-froid avec un refroidisseur à air extérieur (47) et un réservoir de stockage de protection antigel (49) ;
un circuit de refroidissement comportant une pompe à eau de refroidissement (26) ;
un condenseur (14) destiné à condenser de l'eau de gaz d'échappement de pile à combustible et à alimenter dans le circuit de refroidissement la chaleur perdue résultant de la condensation ;
dans lequel l'unité de pile à combustible (16) est raccordée à la pompe à eau de refroidissement (26) et reliée au condenseur (14) par le biais du circuit de refroidissement conprenant la pompe à eau de refroidissement (26) ; et
dans lequel le refroidisseur à air extérieur (47) est raccordé entre le réservoir de stockage de protection antigel (49) et la pompe à eau de refroidissement par le biais d'une conduite (67) ;
dans lequel le module d'aspiration (101) comporte, pour aspirer l'oxygène à travers l'unité de pile à combustible, le séparateur d'eaux usées (2), qui est réalisé sous la forme d'un réservoir sous pression et relié à l'environnement de l'aéronef pour générer la dépression nécessaire, et qui est en outre conçu pour recevoir des eaux usées de toilettes de bord ou d'un lavabo.

2. Avion selon la revendication 1,
dans lequel le module d'alimentation (103) est conçu pour générer de l'eau fraîche et de l'énergie électrique.

3. Avion selon la revendication 1 ou 2,
dans lequel le module d'alimentation (103) comporte un échangeur de chaleur et d'humidité (17) pour humidifier préalablement l'oxygène aspiré à travers l'unité de pile à combustible (16).

4. Avion selon l'une des revendications précédentes,
dans lequel le module de stockage (102) comporte un réservoir de stockage d'eaux usées (1), qui est soumis en permanence à une pression de cabine.

5. Avion selon la revendication 4,
dans lequel le module d'aspiration (101) et le module de stockage (102) forment une partie d'un système de vide pour des toilettes de bord.

6. Avion selon l'une des revendications précédentes, présentant en outre :
un module d'eau fraîche (104) destiné à stocker l'eau fraîche générée par le module d'alimentation (103) ;
dans lequel le module d'eau fraîche (104) comporte un circuit d'eau froide et un circuit d'eau chaude comportant un échangeur de chaleur (27) ;
dans lequel le circuit d'eau chaude peut être chauffé par le biais de l'échangeur de chaleur (27) au moyen de chaleur perdue résultant d'une condensation dans un condenseur (14) du module d'alimentation (103) ou du fonctionnement d'un consommateur électrique ;
dans lequel le circuit d'eau froide et le circuit d'eau chaude sont conçus pour l'alimentation en eau fraîche dans l'aéronef.

7. Avion selon la revendication 6,
dans lequel le circuit d'eau froide est réalisé avec une vanne de régulation pour l'alimentation du circuit d'eau chaude.

8. Avion selon la revendication 7,
dans lequel le module d'eau fraîche (104) comporte une pompe à éjecteur (37) pour adapter un niveau de pression d'un côté sortie à un niveau de pression d'un côté entrée du condenseur (14).

9. Avion selon l'une des revendications précédentes,
dans lequel le module d'aspiration (101) est conçu par ailleurs pour alimenter un espace à inerter (54) de l'aéronef en air appauvri en oxygène provenant du module d'alimentation (103).

10. Avion selon la revendication 9, présentant en outre :
une régulation de la pression (55) ;
une sortie (56) menant à l'air extérieur de l'aéronef ;
une conduite destinée à relier le module d'aspiration (101) à l'espace à inerter (54) ;
dans lequel la régulation de pression (55) et la sortie (56) sont disposées dans l'espace (54).

11. Avion selon l'une des revendications précédentes, présentant en outre :
un capteur d'oxygène destiné à mesurer une teneur en oxygène dans le gaz d'échappement de cathode de l'unité de pile à combustible (16) .
